# EUROPÄISCHE PATENTSCHRIFT

(11) **EP 4 034 868 B1**
(45) Veröffentlichungstag und Bekanntmachung des Hinweises auf die Patenterteilung: **22.04.2026**
(21) Anmeldenummer: 20780611.8
(22) Anmeldetag: 23.09.2020
(51) Int. Cl.: G01N 27/62

(54) **IONENMOBILITÄTSSPEKTROMETER**
ION MOBILITY SPECTROMETER
SPECTROMÈTRE DE MOBILITÉ IONIQUE

(30) Priorität: 23.09.2019 DE 102019125482
(43) Veröffentlichungstag der Anmeldung: 03.08.2022
(73) Patentinhaber: Gottfried Wilhelm Leibniz Universität Hannover, 30167 Hannover (DE)
(72) Erfinder: ZIMMERMANN, Stefan, 30938 Burgwedel (DE); KIRK, Ansgar, 30419 Hannover (DE)
(74) Vertreter: Günther, Constantin
(86) Internationale Anmeldenummer: PCT/EP2020/076453
(87) Internationale Veröffentlichungsnummer: WO 2021/058493

(56) Entgegenhaltungen:
- DE-T2- 69 312 471
- US-A- 4 311 669
- US-A- 4 445 038
- US-A- 5 200 614
- US-A1- 2004 164 238
- BUNERT E ET AL: "Shutterless ion mobility spectrometer with fast pulsed electron source", REVIEW OF SCIENTIFIC INSTRUMENTS, AIP, MELVILLE, NY, US, vol. 88, no. 2, 13 February 2017 (2017-02-13), XP012216053, ISSN: 0034-6748, [retrieved on 20170213], DOI: 10.1063/1.4976021

## Beschreibung

Die Erfindung betrifft ein lonenmobilitätsspektrometer mit einer Ionisationskammer, mit mindestens einer Ionisationsquelle und mindestens einer der Ionisationskammer in einer gewünschten Driftrichtung der Ionen nachgeordneten Driftkammer, wobei die Ionisationskammer mit einem Zuführkanal verbunden ist, durch den ein zu analysierendes Probengas der Ionisationskammer zugeführt werden kann.

lonenmobilitätsspektrometer (IMS) dienen zur Analyse von in gasförmigen Medien enthaltenen Substanzen, die in der Regel nur in sehr geringen Konzentrationen auftreten. Ionenmobilitätsspektrometer werden häufig in Kombination mit einer hocheffizienten chemischen Atmosphärendruckionisation (APCI) als schnelle und sensitive Spurengasdetektoren eingesetzt. Insbesondere sensitiv sind Systeme mit Field-Switching-Shutter. Bei diesen ist der Bereich, in dem die Ionisation der Analyt-Moleküle stattfindet, die sogenannte Ionisationskammer, während der Ionisation im Wesentlichen feldfrei. Diese Ionisationskammer wird üblicherweise durch zwei im Wesentlichen parallele Elektroden begrenzt, wobei mindestens eine der Elektroden als Gitterelektrode ausgebildet ist. Durch das namensgebende schnelle Einschalten des elektrischen Feldes werden die Ionen dann als ein komprimiertes Paket in den Driftbereich des IMS abgegeben. Alternativ kann das elektrische Feld zwischen den beiden Elektroden permanent vorhanden sein und stattdessen die Ionisationsquelle gepulst werden.

Eine besondere Schwierigkeit stellt bei dieser Art Ionentor, d.h. dem Field-Switching-Shutter, allerdings die Zuführung der Probe dar. Da das Ionenpaket in der Ionisationskammer steht bzw. nur ein kurzer Ionisationspuls in dieser Ionisationskammer stattfindet, kann nur durch eine geschickte Verteilung des Probengases eine effiziente Durchmischung und damit Ionisation sichergestellt werden.

Aus der US 2004/0164238 A1 ist eine gepulste Ionisationsquelle für miniaturisierte lonenmobilitätsspektrometer bekannt. Aus der US 5,200,614 A ist ein Ionenmobilitätsspektrometer bekannt. Aus der US 4,445,038 A ist ein lonenmobilitätsspektrometer mit dualer Polarität bekannt. Aus der DE 693 12 471 T2 ist ein Photoionisationsionenmobilitätsspektrometer bekannt. Weitere lonenmobilitätsspektrometer werden beschrieben in der Veröffentlichung von Bunert E. et al.: "Shutterless ion mobility spectrometer with fast pulsed electron source". Aus der US 4,311,669 A ist eine Membranschnittstelle für lonenmobilitätsdetektorzellen bekannt.

Der Erfindung liegt die Aufgabe zugrunde, ein hinsichtlich der zuvor erläuterten Problematik verbessertes lonenmobilitätsspektrometer anzugeben.

Diese Aufgabe wird mit einem lonenmobilitätsspektrometer gemäß Anspruch 1 gelöst. Das lonenmobilitätsspektrometer weist einen vom Zuführkanal getrennten Abführkanal auf, der mit der Ionisationskammer verbunden ist und durch den das Probengas aus der Ionisationskammer abführbar ist. Dabei ist entweder die Ionisationskammer als zumindest während einer Ionisationsphase im Wesentlichen feldfrei betriebene Ionisationskammer ausgebildet, bei der in einer Injektionsphase mittels eines elektrischen Felds Ionen aus der Ionisationskammer in die Driftkammer bewegt werden, nämlich mittels eines Field-Switching-Shutter, oder die Ionisationsquelle ist als gepulst betriebene Ionisationsquelle ausgebildet und das elektrische Feld im Field-Switching-Shutter dauerhaft vorhanden. Die Erfindung hat den Vorteil, dass das Probengas sehr effizient und damit vorteilhaft für eine hochsensitive Messung durch das lonenmobilitätsspektrometer geführt werden kann. Es kann auf diese Weise eine geschickte Verteilung des Probengases und damit eine effiziente Ionisation der Ionisationskammer hergestellt werden kann. Es können insbesondere unerwünschte Verwirbelungen des Probengases und unerwünschte Mischungen mit anderen im lonenmobilitätsspektrometer geführten Gasströmen, wie z.B. einem Driftgasstrom, vermieden werden.

Das lonenmobilitätsspektrometer kann dazu eingerichtet sein, die Ionisationskammer zumindest während einer Ionisationsphase im Wesentlichen feldfrei zu betreiben und in einer Injektionsphase mittels eines elektrischen Felds Ionen aus der Ionisationskammer in die Driftkammer zu bewegen. Zusätzlich zu den beiden genannten Zuständen "Ionisationsphase" und "Injektionsphase" können noch einer oder mehrere weitere Zustände vorhanden sein, in den die Ionisationskammer im Wesentlichen feldfrei oder feldbehaftet betrieben sein kann.

Das Probengas weist dabei die mittels lonenmobilitätsspektrometrie zu analysierenden Analyt-Moleküle auf, die durch Ionisation in Analyt-Ionen gewandelt werden und durch elektrische Felder durch die Driftkammer geführt werden.

Gemäß der Erfindung ist vorgesehen, dass der Zuführkanal und der Abführkanal unmittelbar in die Ionisationskammer münden. Auf diese Weise wird eine besonders effiziente und widerstandsarme Führung des Probengases durch die Ionisationskammer gewährleistet.

Gemäß einer vorteilhaften Ausgestaltung der Erfindung ist vorgesehen, dass durch die Anordnung des Zuführkanals und des Abführkanals eine Strömungsrichtung des Probengases durch die Ionisationskammer definiert ist, die orthogonal zur Driftrichtung der Ionen durch die Driftkammer verläuft. Der Gasstrom des Probengases fließt somit quer zur Driftrichtung durch die Ionisationskammer. Auch dies ist förderlich für eine geschickte Verteilung des Probengases und damit eine effiziente Ionisation der Ionisationskammer.

Der Zuführkanal kann an seiner Außenseite unmittelbar mit der Atmosphäre verbunden sein oder mit einem Einlasssystem, wie beispielsweise einer Membran, einer Probenschleife oder einem Thermodesorber, oder mit einer Vortrennung, wie beispielsweise einem Gaschromatographen. Insbesondere die Kopplung des Zuführkanals mit einer Vortrennung ist vorteilhaft, da durch die Probengasführung ein laminarer Probengasstrom sichergestellt und Verwirbelungen vermieden werden. Dadurch wird die Probe effizient und ohne erneute Durchmischung durch die Ionisationskammer geführt und so die durch die Vortrennung erreichte Separation erhalten.

Gemäß einer vorteilhaften Ausgestaltung der Erfindung ist vorgesehen, dass der Abführkanal mit der umgebenden Atmosphäre oder einer Absaugeinrichtung verbunden ist. Dies erlaubt ein effizientes Herausführen des Probengases aus der Ionisationskammer. Die Absaugeinrichtung kann zum Beispiel eine Pumpe sein. Zwischen der Absaugeinrichtung und dem Abführkanal kann zusätzlich in Massenflussregler oder ein Druckregler platziert werden, um das Herausführen des Probengases zu kontrollieren.

Gemäß einer vorteilhaften Ausgestaltung der Erfindung ist vorgesehen, dass der Zuführkanal und/oder der Abführkanal eine innere Wandung aus inertem Material, insbesondere aus Glas oder mit einer inerten Beschichtung, insbesondere aus Glas und/oder Silconert, aufweist. Hierdurch wird sichergestellt, dass das Probengas nicht unerwünschter Weise durch andere Medien verunreinigt wird, was zu einer Verfälschung der Messung führen könnte. Das inerte Material ist dabei insbesondere gegenüber dem Probengas, üblicherweise Luft mit darin enthaltenen Analyt-Molekülen, inert ausgebildet.

Gemäß einer weiteren Ausgestaltung ist vorgesehen, dass der Zuführkanal und/oder der Abführkanal nicht aus einer einzigen Öffnung, sondern aus einer Vielzahl kleinerer Öffnungen gebildet werden. Dann ist die Gesamtheit dieser Öffnungen als Zuführkanal bzw. Abführkanal zu sehen.

Gemäß einer vorteilhaften Ausgestaltung der Erfindung ist vorgesehen, dass die Ionisationsquelle
a) innerhalb der Ionisationskammer angeordnet ist oder eine der Wände der Ionisationskammer zumindest zum Teil bildet
   und/oder
b) außerhalb der Ionisationskammer angeordnet ist und über einen Ionisationskanal, der in die Ionisationskammer mündet, mit der Ionisationskammer verbunden ist.

Die Ionisationsquelle kann beispielsweise zur Durchführung einer chemischen Ionisation der Analyt-Moleküle mittels Reaktant-Ionen ausgebildet sein, beispielsweise ausgelöst durch eine radioaktive oder nicht-radioaktive Elektronenquelle, Röntgenstrahlung oder eine dielektrisch behinderte Entladung. In diesem Fall können die Reaktant-Ionen auch zunächst außerhalb der Ionisationskammer erzeugt und zur Ionisation der Analyt-Moleküle in die Ionisationskammer hinein bewegt werden. Möglich ist auch eine direkte Ionisation beispielsweise mittels ultravioletter Strahlung oder einem Laser. Eine radioaktive Ionisationsquelle kann zum Beispiel eine Tritiumquelle oder eine Nickelquelle sein.

Wie erwähnt, ist das erfindungsgemäße lonenmobilitätsspektrometer in der einen Alternative derart ausgebildet, dass die Ionisationskammer während einer Ionisationsphase im Wesentlichen feldfrei betrieben ist. Es liegen somit in der Ionisationskammer während der Ionisationsphase im Wesentlichen keine elektrischen Felder vor, sodass dort befindliche Ionen zunächst verharren und somit nicht durch elektrische Felder bewegt werden. Erst durch Schalten eines Ionentors bzw. eines Shutters werden die Ionen von der Ionisationskammer zur Driftkammer bewegt und dann durch weitere elektrische Felder durch die Driftkammer hindurch zu einem Ionendetektor geführt.

Gemäß der Erfindung ist vorgesehen, dass das lonenmobilitätsspektrometer wenigstens ein Ionentor in Form eines Field-Switching-Shutter aufweist. Es erlaubt ein besonders effizientes Bereitstellen von Analyt-Ionen in der Ionisationskammer.

Ein Field-Switching-Shutter weist eine Gegenelektrode und eine Injektionselektrode auf. Beispielsweise kann der Abstand zwischen den Elektroden gering sein, vorteilhafterweise kleiner als der Innendurchmesser der Driftkammer oder kleiner als 10 mm, oder kleiner als 5 mm. Bei Einsatz eines Field-Switching-Shutter erfolgt die Ionisierung, das heißt die Bereitstellung von Ionen aus einer Probe, in einem feldfreien oder nahezu feldfreien Raum, der auch als Ionisationskammer bezeichnet wird. Wenn dann ein Analyseschritt durchgeführt werden soll, werden die Elektroden des Field-Switching-Shutter für eine Injektionsphase entsprechend umgeschaltet, d.h. es wird zumindest eine Elektrode umgeschaltet, wodurch die Ionen in Richtung der Driftkammer in Bewegung gesetzt werden. Die Ionisationskammer befindet sich zwischen der Gegenelektrode und der Injektionselektrode, wobei die Driftkammer des lonenmobilitätsspektrometers von der Ionisationskammer aus gesehen hinter der Injektionselektrode angeordnet ist. Durch entsprechende Potentialumschaltung der Elektroden des Field-Switching-Shutter können in der Ionisationskammer bereit gestellte Ionen als Ionenpaket in die Driftkammer abgegeben werden, wo sie durch ein dort erzeugtes elektrisches Feld entlang der Driftkammer bis zu einem Ionendetektor geführt werden, an dem die Detektion der auftreffenden Ionen erfolgt. Vorteilhafterweise kann während der Injektionsphase die elektrische Feldstärke innerhalb der Ionisationskammer höher als die elektrische Feldstärke in der Driftkammer sein, z.B. mehr als dreimal so hoch. Ionenmobilitätsspektrometer solcher Bauart können auch deswegen besonders kompakt bauend und kostengünstig realisiert werden, weil dort beispielsweise keine zusätzliche Reaktionskammer, wie aus DE 10 2015 112 869 A1 bekannt, der Driftkammer vorgeordnet werden muss. Dementsprechend kann das lonenmobilitätsspektrometer derart ausgebildet sein, dass ein elektrisches Feld in der Ionisationskammer lediglich durch die Elektroden des Field-Switching-Shutter erzeugt wird, sodass keine zusätzliche Felderzeugungseinrichtung zur Erzeugung eines elektrischen Felds in der Ionisationskammer erforderlich ist.

Bei einem Field-Switching-Shutter ist somit die Ionisationskammer zumindest während der Ionisationsphase im Wesentlichen frei von elektrischen Feldern. Um diesen Zustand der Feldfreiheit in der Ionisationskammer zu erreichen, kann ein gleiches Potential zwischen der Gegenelektrode und der Injektionselektrode des Field-Switching-Shutter vorhanden sein. Es kann auch eine geringfügige Potentialdifferenz zwischen der Gegenelektrode und der Injektionselektrode angelegt werden, um einen Felddurchgriff des elektrischen Felds aus der Driftkammer zu kompensieren. In diesem Fall bewirkt die Potentialdifferenz zwischen der Gegenelektrode und der Injektionselektrode aber gerade nicht die Erzeugung eines elektrischen Felds in der Ionisationskammer, sondern wirkt dem Durchgriff des Feldes der Driftkammer entgegen und kompensiert somit den Zustand in der Ionisationskammer in Richtung eines feldfreien Zustands.

Zusätzlich oder alternativ kann das lonenmobilitätsspektrometer eine gepulst betriebene Ionisationsquelle aufweisen, z.B. eine schnell pulsbare Ionisationsquelle. In diesem Fall gibt die Ionisationsquelle nur für einen gewissen Zeitraum ionisierende Strahlung ab. Somit lassen sich direkt durch Schalten der Ionisationsquelle Ionenpakete im von der ionisierenden Strahlung durchdrungenen Bereich erzeugen. In diesem Fall kann auf das Schalten des Ionentors verzichtet werden und der Field-Switching-Shutter befindet sich permanent in der Injektionsphase, das heißt es liegt permanent ein elektrisches Feld zwischen Gegenelektrode und Injektionselektrode an. Das lonenmobilitätsspektrometer kann in diesem Fall auch ganz ohne Ionentor bzw. Field-Switching-Shutter realisiert werden. Es ist dann lediglich eine Felderzeugungsvorrichtung, z.B. mit zwei Elektroden, erforderlich, um ein elektrisches Feld zu erzeugen, durch das die Ionen aus der Ionisationskammer in die Driftkammer bewegt werden.

Wie bereits beschrieben ist, kann eine elektrische Feldstärke innerhalb der Ionisationskammer vorteilhafterweise größer als die elektrische Feldstärke in der Driftkammer sein. Die gepulste Ioneninjektion erfolgt durch schnelles Pulsen der Ionisationsquelle, z.B. mit einer Pulsdauer kleiner 100 µs, oder kleiner 10 µs.

Alternativ können auch weitere Varianten von Field-Switching-Shutter in Kombination mit der erfindungsgemäßen Probengasführung genutzt werden, wie beispielsweise ein Field-Switching-Shutter mit zusätzlichen Elektroden nach Patentanmeldung DE 10 2018 107 909.5.

Alternativ kann auch gemäß Patentanmeldung DE 10 2018 107 910.9 ein zweiter Field-Switching-Shutter mit einer zweiten Driftkammer mit derselben Ionisationskammer verbunden sein. Das lonenmobilitätsspektrometer ist dann als Doppelröhren-Ionenmobilitätsspektrometer ausgebildet.

Der Zuführkanal und Abführkanal können beispielsweise im Winkel zueinander angeordnet sein. Das Probengas kann durch die Anordnung aus dem Zuführkanal und dem Abführkanal den Ionisationsraum im Wesentlichen orthogonal zur gewünschten Driftrichtung D der Ionen in der Driftkammer durchströmen. Es ist hierbei vorteilhaft, den Großteil des Bereichs zwischen der Injektionselektrode und der Gegenelektrode des Field-Switching-Shutter mit dem Probengas zu durchströmen.

Gemäß einer vorteilhaften Ausgestaltung der Erfindung ist vorgesehen, dass die Mittelachse des Zuführkanals im Wesentlichen mit der Mittelachse des Abführkanals fluchtet. Mit anderen Worten, der Zuführkanal und der Abführkanal sind als axial fluchtende Kanäle ausgebildet. Dies erlaubt eine strömungsgünstige Führung des Probengases durch das lonenmobilitätspektrometer. Insbesondere können Verwirbelungen des Probengas-Stroms weitestgehend vermieden werden.

Gemäß einer vorteilhaften Ausgestaltung der Erfindung ist vorgesehen, dass der Zuführkanal von seiner Mündungsstelle in die Ionisationskammer über einen in der Ionisationskammer gebildeten Verbindungskanal mit der Mündungsstelle des Abführkanals in die Ionisationskammer verbunden ist, wobei der Verbindungskanal als laminarer Strömungskörper ausgebildet ist. Dies erlaubt eine Führung des Probengases durch die Ionisationskammer als laminarer Gasstrom, was günstig für eine besonders effiziente Ionisation der Analyt-Ionen ist. Es werden Verwirbelungen des Probengas-Stroms weitestgehend vermieden.

Gemäß einer vorteilhaften Ausgestaltung der Erfindung ist vorgesehen, dass die Querschnittsfläche des Verbindungskanals um weniger als ± 50 %, oder weniger als ± 35 %, oder weniger als ± 25 % von der Querschnittsfläche des Zuführkanals und/oder des Abführkanals abweicht. Es kann auch vorgesehen sein, dass die Breite und Tiefe des Verbindungskanals um weniger als ± 50 %, oder weniger als ± 35 %, oder weniger als ± 25 % von der Breite und Tiefe des Zuführkanals und/oder des Abführkanals abweicht. Dementsprechend liegt allenfalls eine geringfügige Querschnittsvariation auf dem Gasströmungsweg des Probengases durch die Ionisationskammer vor. Die Variation der Querschnittsfläche kann auf dem Gasströmungsweg auch gleich null sein, das heißt die Querschnittsfläche verändert sich auf dem gesamten Gasströmungsweg vom Zuführkanal durch den Verbindungskanal und den Abführkanal nicht.

Gemäß einer vorteilhaften Ausgestaltung der Erfindung ist vorgesehen, dass der Zuführkanal und/oder der Abführkanal einen im Wesentlichen quadratischen, kreisförmigen, rechteckigen oder elliptischen Querschnitt aufweist. Auf diese Weise können relativ große Querschnitte für die Probengasführung bei zugleich stabiler Bauweise des lonenmobilitätsspektrometers realisiert werden.

Gemäß einer vorteilhaften Ausgestaltung der Erfindung ist vorgesehen, dass die Breite des Zuführkanals und/oder des Abführkanals wenigstens 10 % des Innendurchmessers der Driftkammer aufweist, oder wenigstens 20 %, oder wenigstens 30 %. Auf diese Weise kann ein vergleichsweise großer Strömungsquerschnitt für das Probengas auf dem Weg durch die Ionisationskammer bereitgestellt werden. Als Breite des Zuführkanals und/oder des Abführkanals wird dabei diejenige Abmessung angesehen, die sich orthogonal zur Längsachse des lonenmobilitätsspektrometers und orthogonal zur Mittelachse des Zuführkanals bzw. des Abführkanals erstreckt.

Gemäß einer vorteilhaften Ausgestaltung der Erfindung ist vorgesehen, dass die Tiefe des Zuführkanals und/oder des Abführkanals wenigstens 10 % der Tiefe der Ionisationskammer aufweist, oder wenigstens 20 %, oder wenigstens 30 %. Auf diese Weise kann ein vergleichsweise großer Strömungsquerschnitt für das Probengas auf dem Weg durch die Ionisationskammer bereitgestellt werden. Die Dimension "Tiefe" erstreckt sich dabei in Längsrichtung der Driftkammer bzw. in die Driftrichtung D.

Gemäß einer vorteilhaften Ausgestaltung der Erfindung ist vorgesehen, dass die Breite des Zuführkanals und/oder des Abführkanals um weniger als ± 50 %, oder weniger als ± 35 %, oder weniger als ± 25 % vom Durchmesser des Ionendetektors des lonenmobilitätsspektrometers abweicht. Dies erlaubt eine besonders effiziente Bereitstellung eines großflächigen Ionenpakets in der Ionenkammer, sodass dem lonendetektor eine vergleichsweise große Zahl von Analyt-Ionen pro lonenmobilitätsspektrometrie-Messung zugeführt werden kann.

Gemäß einer vorteilhaften Ausgestaltung der Erfindung ist vorgesehen, dass die Breite des Zuführkanals und/oder des Abführkanals um weniger als ± 50 %, oder weniger als ± 35 %, oder weniger als ± 25 % vom Durchmesser einer axial montierten Ionisationsquelle abweicht. Dies erlaubt eine besonders effiziente Bereitstellung eines großflächigen Ionenpakets in der Ionenkammer, sodass dem Ionendetektor eine vergleichsweise große Zahl von Analyt-Ionen pro lonenmobilitätsspektrometrie-Messung zugeführt werden kann.

Gemäß einer vorteilhaften Ausgestaltung der Erfindung ist vorgesehen, dass die Tiefe des Zuführkanals und/oder des Abführkanals um weniger als ± 50 %, oder weniger als ± 35 %, oder weniger als ± 25 % vom Durchmesser bzw. der Tiefe einer orthogonal zur Längsachse L des lonenmobilitätsspektrometers montierten Ionisationsquelle abweicht. Dies erlaubt eine besonders effiziente Bereitstellung eines großflächigen Ionenpakets in der Ionenkammer, sodass dem Ionendetektor eine vergleichsweise große Zahl von Analyt-Ionen pro lonenmobilitätsspektrometrie-Messung zugeführt werden kann.

Gemäß einer vorteilhaften Ausgestaltung der Erfindung ist vorgesehen, dass die Querschnittsfläche des Abführkanals um weniger als ± 50 %, oder weniger als ± 35 %, oder weniger als ± 25 % von der Querschnittsfläche des Zuführkanals abweicht. Es kann auch vorgesehen sein, dass die Breite und Tiefe des Abführkanals um weniger als ± 50 %, oder weniger als ± 35 %, oder weniger als ± 25 % von der Breite und Tiefe des Zuführkanals abweicht. Dementsprechend liegt allenfalls eine geringfügige Querschnittsvariation auf dem Gasströmungsweg des Probengases durch die Ionisationskammer vor. Die Querschnittsflächen des Abführkanals und des Zuführkanals können auch gleich sein.

Gemäß einer vorteilhaften Ausgestaltung der Erfindung ist vorgesehen, dass durch die Driftkammer ein Driftgas entgegengesetzt zur gewünschten Driftrichtung der Ionen geführt ist, wobei der Driftgasstrom den Probengas-Strom durch die Ionisationskammer nicht kreuzt. Auch hierdurch würden unerwünschte Verwirbelungen des Probengas-Stroms sowie eine unerwünschte Vermischung bzw. Verunreinigung des Probengas-Stroms mit Teilen des Driftgases vermieden.

Gemäß einer vorteilhaften Ausgestaltung der Erfindung ist vorgesehen, dass das lonenmobilitätsspektrometer einen Driftgas-Auslasskanal aufweist, durch den in die Driftkammer eingespeistes Driftgas abführbar ist, wobei der Driftgas-Auslasskanal separat von dem Abführkanal ausgebildet ist. Dies hat den Vorteil, dass das Driftgas separat vom Probengas durch das lonenmobilitätsspektrometer geführt werden kann, ohne dass es zu unerwünschten Überkreuzungen der Gasströme kommt. Dabei kann der überwiegende Teil des Driftgases oder das gesamte Driftgas durch den Driftgas-Auslasskanal ausgelassen werden. Es ist auch vorteilhaft, einen Anteil des Driftgases über die Ionisationskammer durch den Abführkanal auszulassen, um so das Ionentor zu durchspülen. Auch kann darüber eine Fokussierung der Strömung des Probengases zwischen Zuführkanal und Abführkanal erreicht werden, das heißt eine Aufweitung dieser Strömung in Richtung Driftkammer wird verhindert. Je nach Ausführung des Zuführkanals und/oder des Abführkanals kann das Ionenmobilitätsspektrometer auch ganz ohne einen speziellen Driftgasauslass ausgebildet sein und das Driftgas nur durch den Abführkanal ausgelassen werden, z.B. wenn der Driftgasstrom klein oder ähnlich groß gegenüber dem Probengasstrom ist.

Gemäß einer vorteilhaften Ausgestaltung der Erfindung ist vorgesehen, dass der Driftgas-Auslasskanal unmittelbar in die Driftkammer mündet. Beispielsweise kann der Driftgas-Auslasskanal angrenzend an das Ionentor an der Driftkammer angeordnet sein.

Das Driftgas kann zum Beispiel über einen Driftgas-Einlasskanal, der in der Nähe des Ionendetektors an der Driftkammer angeordnet ist, in die Driftkammer eingelassen werden und außerhalb der Ionisationskammer, zum Beispiel in der Nähe des lonentors wieder ausgelassen werden. Der Einlassbereich des Driftgases kann dabei an einzelnen Punkten, zum Beispiel mittels eines Diffusors, axial über den Querschnitt der Driftkammer verteilt sein oder radial über den Großteil des Umfangs der Driftkammer erfolgen. Der Auslass des Driftgases kann dabei ebenso an einzelnen Punkten oder radial über den Großteil des Umfangs der Driftkammer erfolgen. Es ist dabei vorteilhaft, entweder den gesamten Driftgasstrom an dieser Stelle auszulassen oder einen etwas geringeren Strom des Driftgases, um durch ein Durchströmen des Ionentors mit dem Driftgas in den Abführkanal eine Kontamination der Driftkammer durch Diffusion zu verhindern.

Darüber hinaus ist es vorteilhaft, an weiteren Stellen sauberes Gas einzuleiten, um zum einen die oben beschriebene Fokussierung der Strömung des Probengases zwischen Zuführkanal und Abführkanal weiter zu erhöhen und zum anderen die Kontamination von Oberflächen insbesondere in der Ionisationskammer zu minimieren. Vorteilhaft wird alles so eingeleitete saubere Gas durch den Abführkanal ausgelassen, um besagte Fokussierung zu maximieren. Vorteilhaft ist dabei beispielsweise der Einlass von sauberem Gas durch Öffnungen in der Gegenelektrode. Besonders vorteilhaft ist dabei eine Symmetrie zu der Fokussierung durch das Driftgas, sprich, dass das saubere Gas über dem Großteil der Fläche der Gegenelektrode eingelassen wird und die Menge an so eingelassenem Gas in etwa der Menge an Driftgas entspricht, die durch den Abführkanal ausgelassen wird. Beispielsweise ist der Unterschied kleiner als 50 % oder kleiner als 20 %. Ebenfalls vorteilhaft ist es bei orthogonaler Anbringung der Ionisationsquellen, sauberes Gas durch den / die Ionisationskanäle zu leiten, was ebenfalls zu einer Fokussierung der Strömung des Probengases führt und eine Kontamination der Ionisationsquellen verhindert. Falls die Breite und / oder die Tiefe des Zuführkanals kleiner als die Breite bzw. die Tiefe der Ionisationskammer ist, so ist es ebenfalls vorteilhaft, in gleicher Richtung wie das Probengas auf der restlichen Fläche der Ionisationskammer sauberes Gas einzuleiten.

Die Erfindung wird nachfolgend anhand von Ausführungsbeispielen unter Verwendung und Zeichnungen näher erläutert. Es zeigen
- Figur 1: ein lonenmobilitätsspektrometer in schematischer Darstellung und
- Figur 2: eine Schnittdarstellung durch das lonenmobilitätsspektrometer gemäß Figur 1 in der Schnittebene A-A und
- Figuren 3 bis 7: weitere Querschnittsdarstellungen von Ausführungsformen des lonenmobilitätsspektrometers in der Schnittebene A-A.

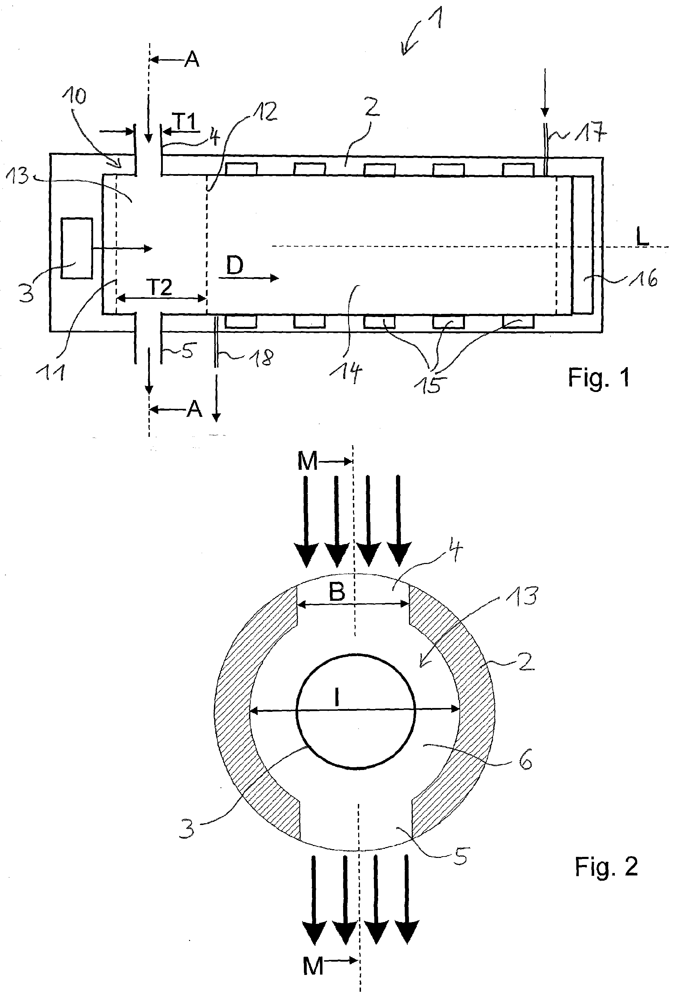

Die Figur 1 zeigt ein lonenmobilitätsspektrometer 1 mit einem Gehäuse 2. In dem Gehäuse 2 ist eine Ionisationskammer 13 und eine Driftkammer 14 vorhanden. Im Bereich der Ionisationskammer 13 weist lonenmobilitätsspektrometer 1 ein Ionentor 10 auf, zum Beispiel in Form eines Field-Switching-Shutters mit einer Injektionselektrode 12 und einer Gegenelektrode 11. Die Ionisationskammer 13 ist dann zwischen der Injektionselektrode 12 und der Gegenelektrode 11 angeordnet. Darüber hinaus kann die Ionisationsquelle 3 auch gleichzeitig die Gegenelektrode 11 bilden. In einer gewünschten Driftrichtung D der Ionen schließt sich an die Ionisationskammer 13 bzw. an die Injektionselektrode 12 die Driftkammer 14 an. Die Driftkammer 14 endet an einem Ionendetektor 16. Im Bereich der Driftkammer 14 ist eine Felderzeugungseinrichtung 15 vorhanden, zum Beispiel in Form von die Driftkammer 14 umgebenden Ringelektroden. Mit der Felderzeugungseinrichtung 15 kann ein elektrisches Feld in der Driftkammer 14 erzeugt werden, das die gewünschte Driftwirkung auf die zu untersuchenden Ionen ausübt, sodass diese vom Ionentor 10 zum Ionendetektor 16 transportiert werden.

Das lonenmobilitätsspektrometer 1 weist außerdem eine Ionisationsquelle 3 auf, durch die Ionen in der Ionisationskammer 13 bereitgestellt werden. Die Ionisationskammer 13 ist mit einem durch das Gehäuse 2 geführten Zuführkanal 4 und einen ebenfalls durch das Gehäuse 2 geführten Abführkanal 5 verbunden. Der Zuführkanal 4 dient zur Zuführung von Probengas zur Ionisationskammer 13, der Abführkanal 5 zum Abführen von Probengas aus Ionisationskammer 13. Auf diese Weise kann ein Probengas-Strom durch die Ionisationskammer 13 von dem Zuführkanal 4 zu dem Abführkanal 5 erzeugt werden. Wie erkennbar ist, ist der Abführkanal 5 getrennt von dem Zuführkanal 4 ausgebildet.

Durch die Driftkammer 14 kann zusätzlich ein Driftgas-Strom geführt werden. Hierzu weist die Driftkammer 14 einen Driftgas-Einlasskanal 17 und einen Driftgas-Auslasskanal 18 auf. Das Driftgas wird somit in entgegengesetzter Richtung zur Driftrichtung D zu dem Driftgas-Auslasskanal 18 geführt. Wie man erkennt, ist der Driftgas-Auslasskanal 18 separat vom Abführkanal 5 sowie vom Zuführkanal 4 ausgebildet.

Die Figur 2 zeigt eine Querschnittsdarstellung des lonenmobilitätsspektrometers 1 im Bereich der Ionisationskammer 13 (entsprechend Schnittebene A-A). Erkennbar ist, dass das Probengas durch Zuführkanal 4 in die Ionisationskammer 13 hineingeführt werden kann und durch den Abführkanal 5 wieder abgeführt werden kann. Der Zuführkanal 4 ist über einen Verbindungskanal 6 innerhalb der Ionisationskammer 13 mit dem Abführkanal 5 verbunden. Es ist dabei vorteilhaft, wenn die Breite B des Zuführkanals 4 ungefähr der Breite des Abführkanals 5 entspricht oder zumindest nicht erheblich davon abweicht. Es ist ferner vorteilhaft, den Zuführkanal 4 und/oder den Abführkanal 5 hinsichtlich ihrer Breite B relativ breit zu gestalten, beispielsweise entsprechend dem Durchmesser des Ionendetektors 16 oder zumindest wenigstens 10 % des Innendurchmesser I der Driftkammer 14.

Um einen laminaren Fluss des Probengas-Stroms durch das Ionenmobilitätsspektrometer zu erzeugen, ist es vorteilhaft, wenn der Zuführkanal 4 und der Abführkanal 5 im Wesentlichen axial fluchtend angeordnet sind oder zumindest auf gegenüberliegenden Seiten der Ionisationskammer 13 platziert sind.

Herstellungstechnisch kann der Zuführkanal 4 oder Abführkanal 5 beispielsweise durch eine seitliche Einfräsung in der Wand des Gehäuses 2 erzeugt werden. Der Zuführkanal 4 oder der Abführkanal 5 kann auch aus einer Vielzahl mehrerer einzelner nebeneinanderliegender Kanäle bzw. Bohrungen gebildet sein.

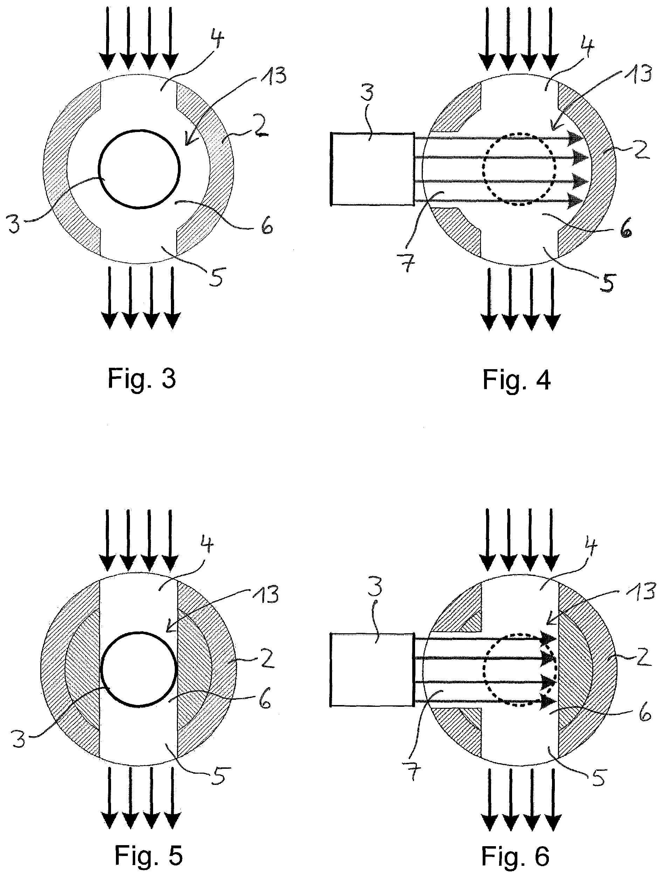

Die Figuren 3 und 4 zeigen weitere Ausführungsformen des Ionenmobilitätsspektrometers hinsichtlich der Probengasführung. Die Figur 3 entspricht dabei der bereits anhand der Figur 2 erläuterten Ausführungsform. In dieser Ausführungsform ist die Ionisationsquelle 3 axial bezüglich der Längsachse L des lonenmobilitätsspektrometer 1 bzw. der Driftkammer 14 montiert. Die Ionisationsquelle 3 kann beispielsweise als Tritiumquelle oder UV-Quelle ausgebildet sein. Darüber hinaus kann die Ionisationsquelle 3 auch gleichzeitig die Gegenelektrode 11 bilden. Bei ausreichend großem Ionendetektor 16 entspricht der hauptsächliche Ionisationsbereich in der Ionisationskammer 13 im Wesentlichen der Größe der Ionisationsquelle 3.

Die Figur 4 zeigt eine Ausführungsform, bei der die Ionisationsquelle 3 außeraxial montiert ist, beispielsweise orthogonal zur Längsachse L des lonenmobilitätsspektrometers 1 und dementsprechend auch orthogonal hierzu in die Ionisationskammer 13 einstrahlt. In diesem Fall kann die Ionisationsquelle 3 beispielsweise eine Röntgenquelle, eine UV-Quelle oder ein Laser sein. In diesem Fall weist das Ionenmobilitätsspektrometer 1 im Bereich der Ionisationskammer 13 einen Ionisationskanal 7, durch den die Strahlung der Ionisationsquelle 3 in die Ionisationskammer 13 geleitet wird. Der Ionisationskanal 7 kann in ähnlicher Weise wie der Zuführkanal 4 oder Abführkanal 5 ausgebildet sein. Beispielsweise kann der Ionisationskanal 7 durch eine seitliche Einfräsung im Gehäuse 2 realisiert werden. Der hauptsächliche Ionisationsbereich entspricht hierbei dem gestrichelt angedeuteten Ionendetektor 16.

Die Figur 5 zeigt eine hinsichtlich der Ionisationsquelle 3 vergleichbare Ausführungsform wie die Figur 3. Im Unterschied zur Figur 3 ist der Verbindungskanal 6 schmaler ausgeführt, beispielsweise als linear verlaufender Kanal ohne Querschnittsvergrößerung oder Querschnittsverringerungen. Auf diese Weise kann besonders effizient eine laminare Durchströmung mit dem Probengas sichergestellt werden.

Die Figur 6 zeigt eine Ausführungsform ähnlich der Figur 4, bei der die Ionisationsquelle 3 seitlich durch Ionisationskanal 7 ihre Strahlung in die Ionisationskammer 13 abgibt. Der Verbindungskanal 6 ist vergleichbar wie in Figur 5 ausgestaltet, wobei in den Verbindungskanal 6 in diesem Fall der Ionisationskanal 7 einmündet.

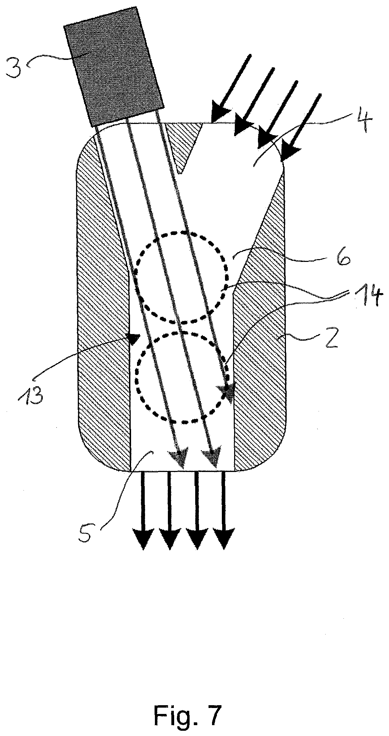

Die Figur 7 zeigt eine Ausführungsform ähnlich der Figur 4, jedoch mit zwei gemäß DE 10 2018 107 910.9 parallel oder nahezu parallel angeordneten Driftkammern 14 mit einer gemeinsamen Ionisationskammer 13. Die Positionen der beiden Ionendetektoren 16 und damit sich ergebenden hauptsächlichen Ionisationsbereiche sind gestrichelt angedeutet. Da hier sowohl die Ionisationsquelle 3 als auch der Zuführkanal 4 und der Abführkanal 5 orthogonal zur Driftrichtung angeordnet sind und die beiden hauptsächlichen Ionisationsbereiche durchströmt werden sollen, ergibt sich eine winklige Anordnung zwischen der Ionisationsquelle 3 und dem auf ihrer Seite liegenden Zuführkanal 4 oder Abführkanal 5.

## Patentansprüche

1. lonenmobilitätsspektrometer (1) mit einer Ionisationskammer (13), mit mindestens einer Ionisationsquelle (3) und mindestens einer der Ionisationskammer (13) in einer gewünschten Driftrichtung (D) der Ionen nachgeordneten Driftkammer (14), wobei die Ionisationskammer (13) mit einem Zuführkanal (4) verbunden ist, durch den ein zu analysierendes Probengas der Ionisationskammer (13) zugeführt werden kann, wobei das lonenmobilitätsspektrometer (1) wenigstens ein Ionentor (10) in Form eines Field-Switching-Shutter aufweist, wobei der Field-Switching-Shutter eine Gegenelektrode (11) und eine Injektionselektrode (12) aufweist, wobei sich die Ionisationskammer (13) von der Gegenelektrode (11) bis zur Injektionselektrode (12) erstreckt, wobei das Ionenmobilitätsspektrometer (1) einen vom Zuführkanal (4) getrennten Abführkanal (5) aufweist, der mit der Ionisationskammer (13) verbunden ist und durch den das Probengas aus der Ionisationskammer (13) abführbar ist, wobei
a) das lonenmobilitätsspektrometer (1) dazu eingerichtet ist, die Ionisationskammer (13) zumindest während einer Ionisationsphase im Wesentlichen feldfrei zu betreiben und in einer Injektionsphase mittels eines elektrischen Felds Ionen aus der Ionisationskammer (13) in die Driftkammer (14) zu bewegen
oder
b) die Ionisationsquelle (3) als gepulst betriebene Ionisationsquelle ausgebildet ist und das elektrische Feld zwischen der Gegenelektrode (11) und der Injektionselektrode (12) permanent vorhanden ist,
**dadurch gekennzeichnet, dass** der Zuführkanal (4) und der Abführkanal (5) unmittelbar in die Ionisationskammer (13) münden.

2. lonenmobilitätsspektrometer nach einem der vorhergehenden Ansprüche, **dadurch gekennzeichnet, dass** durch die Anordnung des Zuführkanals (4) und des Abführkanals (5) eine Strömungsrichtung des Probengases durch die Ionisationskammer (13) definiert ist, die orthogonal zur Driftrichtung (D) der Ionen durch die Driftkammer (14) verläuft.

3. lonenmobilitätsspektrometer nach einem der vorhergehenden Ansprüche, **dadurch gekennzeichnet, dass** der Abführkanal (5) mit der umgebenden Atmosphäre oder einer Absaugeinrichtung verbunden ist.

4. lonenmobilitätsspektrometer nach einem der vorhergehenden Ansprüche, **dadurch gekennzeichnet, dass** der Zuführkanal (4) mit der umgebenden Atmosphäre oder einem Einlasssystem verbunden ist.

5. lonenmobilitätsspektrometer nach einem der vorhergehenden Ansprüche, **dadurch gekennzeichnet, dass** der Zuführkanal (4) und/oder der Abführkanal (5) eine innere Wandung aus inertem Material oder mit einer inerten Beschichtung, insbesondere aus Glas und/oder Silconert, aufweist.

6. lonenmobilitätsspektrometer nach einem der vorhergehenden Ansprüche, **dadurch gekennzeichnet, dass** die Ionisationsquelle (3)
a) innerhalb der Ionisationskammer (13) angeordnet ist oder eine der Wände der Ionisationskammer (13) zumindest zum Teil bildet
und/oder
b) außerhalb der Ionisationskammer (13) angeordnet ist und über einen Ionisationskanal (7), der in die Ionisationskammer (13) mündet, mit der Ionisationskammer (13) verbunden ist.

7. lonenmobilitätsspektrometer nach einem der vorhergehenden Ansprüche, **dadurch gekennzeichnet, dass** die Mittelachse (M) des Zuführkanals (4) im Wesentlichen mit der Mittelachse (M) des Abführkanals (5) fluchtet.

8. lonenmobilitätsspektrometer nach einem der vorhergehenden Ansprüche, **dadurch gekennzeichnet, dass** der Zuführkanal (4) von seiner Mündungsstelle in die Ionisationskammer (13) über einen in der Ionisationskammer gebildeten Verbindungskanal (6) mit der Mündungsstelle des Abführkanals (5) in die Ionisationskammer (13) verbunden ist, wobei der Verbindungskanal (6) als laminarer Strömungskörper ausgebildet ist.

9. lonenmobilitätsspektrometer nach Anspruch 8, **dadurch gekennzeichnet, dass** die Querschnittsfläche des Verbindungskanals (6) um weniger als ± 50 % von der Querschnittsfläche des Zuführkanals (4) und/oder des Abführkanals (5) abweicht.

10. lonenmobilitätsspektrometer nach einem der vorhergehenden Ansprüche,
**dadurch gekennzeichnet, dass** der Zuführkanal (4) und/oder der Abführkanal (5) einen im Wesentlichen quadratischen, kreisförmigen, rechteckigen oder elliptischen Querschnitt aufweist.

11. lonenmobilitätsspektrometer nach einem der vorhergehenden Ansprüche,
**dadurch gekennzeichnet, dass** die Breite (B) des Zuführkanals (4) und/oder des Abführkanals (5) wenigstens 10 % des Innendurchmessers (I) der Driftkammer (14) aufweist.

12. lonenmobilitätsspektrometer nach einem der vorhergehenden Ansprüche,
**dadurch gekennzeichnet, dass** die Tiefe (T1) des Zuführkanals (4) und/oder des Abführkanals (5) wenigstens 10 % der Tiefe (T2) der Ionisationskammer (13) aufweist.

13. lonenmobilitätsspektrometer nach einem der vorhergehenden Ansprüche,
**dadurch gekennzeichnet, dass** die Breite (B) des Zuführkanals (4) und/oder des Abführkanals (5) um weniger als ± 50 % vom Durchmesser des Ionendetektors (16) des lonenmobilitätsspektrometers (1) abweicht.

14. lonenmobilitätsspektrometer nach einem der vorhergehenden Ansprüche,
**dadurch gekennzeichnet, dass** die Breite (B) des Zuführkanals (4) und/oder des Abführkanals (5) um weniger als ± 50 % vom Durchmesser einer axial montierten Ionisationsquelle (3) des lonenmobilitätsspektrometers (1) abweicht.

15. lonenmobilitätsspektrometer nach einem der vorhergehenden Ansprüche,
**dadurch gekennzeichnet, dass** die Querschnittsfläche des Abführkanals (5) um weniger als ± 50 % von der Querschnittsfläche des Zuführkanals (4) abweicht.

16. lonenmobilitätsspektrometer nach einem der vorhergehenden Ansprüche,
**dadurch gekennzeichnet, dass** das lonenmobilitätsspektrometer (1) einen Driftgas-Auslasskanal (18) aufweist, durch den in die Driftkammer (14) eingespeistes Driftgas abführbar ist, wobei der Driftgas-Auslasskanal (18) separat von dem Abführkanal (5) ausgebildet ist.

17. lonenmobilitätsspektrometer nach Anspruch 16, **dadurch gekennzeichnet, dass** der Driftgas-Auslasskanal (18) unmittelbar in die Driftkammer (14) mündet.

## Claims

1. Ion mobility spectrometer (1) with an ionization chamber (13), with at least one ionization source (3) and at least one drift chamber (14) arranged downstream of the ionization chamber (13) in a desired drift direction (D) of the ions, wherein the ionization chamber (13) is connected to a feed channel (4) through which a sample gas to be analyzed can be fed to the ionization chamber (13), wherein the ion mobility spectrometer (1) has at least one ion gate (10) in the form of a field-switching shutter, wherein the field-switching shutter has a counter electrode (11) and an injection electrode (12), wherein the ionization chamber (13) extends from the counter electrode (11) to the injection electrode (12), wherein the ion mobility spectrometer (1) has a discharge channel (5) separate from the supply channel (4), which is connected to the ionization chamber (13) and through which the sample gas can be discharged from the ionization chamber (13), wherein
a) the ion mobility spectrometer (1) is designed to operate the ionization chamber (13) essentially field-free at least during an ionization phase and to move ions from the ionization chamber (13) into the drift chamber (14) by means of an electric field during an injection phase
or
b) the ionization source (3) is designed as a pulsed ionization source and the electric field between the counter electrode (11) and the injection electrode (12) is permanently present,
**characterized in that** the supply channel (4) and the discharge channel (5) open directly into the ionization chamber (13).

2. Ion mobility spectrometer according to one of the preceding claims, **characterized in that** the arrangement of the supply channel (4) and the discharge channel (5) defines a flow direction of the sample gas through the ionization chamber (13) which runs orthogonally to the drift direction (D) of the ions through the drift chamber (14).

3. Ion mobility spectrometer according to one of the preceding claims, **characterized in that** the discharge channel (5) is connected to the surrounding atmosphere or to an extraction device.

4. Ion mobility spectrometer according to one of the preceding claims, **characterized in that** the supply channel (4) is connected to the surrounding atmosphere or to an inlet system.

5. Ion mobility spectrometer according to one of the preceding claims, **characterized in that** the feed channel (4) and/or the discharge channel (5) has an inner wall made of inert material or with an inert coating, in particular made of glass and/or Silconert.

6. Ion mobility spectrometer according to one of the preceding claims, **characterized in that** the ionization source (3)
a) is arranged within the ionization chamber (13) or at least partially forms one of the walls of the ionization chamber (13)
and/or
b) is arranged outside the ionization chamber (13) and is connected to the ionization chamber (13) via an ionization channel (7) which opens into the ionization chamber (13).

7. Ion mobility spectrometer according to one of the preceding claims, **characterized in that** the central axis (M) of the feed channel (4) is essentially aligned with the central axis (M) of the discharge channel (5).

8. Ion mobility spectrometer according to one of the preceding claims, **characterized in that** the feed channel (4) is connected from its opening point in the ionization chamber (13) via a connection channel (6) formed in the ionization chamber to the opening point of the discharge channel (5) into the ionization chamber (13), wherein the connecting channel (6) is designed as a laminar flow body.

9. Ion mobility spectrometer according to claim 8, **characterized in that** the cross-sectional area of the connecting channel (6) deviates by less than ± 50% from the cross-sectional area of the feed channel (4) and/or the discharge channel (5).

10. Ion mobility spectrometer according to one of the preceding claims, **characterized in that** the feed channel (4) and/or the discharge channel (5) has a substantially square, circular, rectangular, or elliptical cross-section.

11. Ion mobility spectrometer according to one of the preceding claims, **characterized in that** the width (B) of the feed channel (4) and/or the discharge channel (5) is at least 10% of the inner diameter (I) of the drift chamber (14).

12. Ion mobility spectrometer according to one of the preceding claims, **characterized in that** the depth (T1) of the feed channel (4) and/or the discharge channel (5) is at least 10% of the depth (T2) of the ionization chamber (13).

13. Ion mobility spectrometer according to one of the preceding claims, **characterized in that** the width (B) of the feed channel (4) and/or the discharge channel (5) deviates by less than ± 50% from the diameter of the ion detector (16) of the ion mobility spectrometer (1).

14. Ion mobility spectrometer according to one of the preceding claims, **characterized in that** the width (B) of the feed channel (4) and/or the discharge channel (5) deviates by less than ± 50% from the diameter of an axially mounted ionization source (3) of the ion mobility spectrometer (1).

15. Ion mobility spectrometer according to one of the preceding claims, **characterized in that** the cross-sectional area of the discharge channel (5) deviates by less than ± 50% from the cross-sectional area of the supply channel (4).

16. Ion mobility spectrometer according to one of the preceding claims, **characterized in that** the ion mobility spectrometer (1) has a drift gas outlet channel (18) through which drift gas fed into the drift chamber (14) can be discharged, wherein the drift gas outlet channel (18) is formed separately from the discharge channel (5).

17. Ion mobility spectrometer according to claim 16, **characterized in that** the drift gas outlet channel (18) opens directly into the drift chamber (14).

## Revendications

1. Spectromètre à mobilité ionique (1) comprenant une chambre d'ionisation (13), au moins une source d'ionisation (3) et au moins une chambre de dérive (14) disposée en aval de la chambre d'ionisation (13) dans une direction de dérive souhaitée (D) des ions,
dans lequel
la chambre d'ionisation (13) est reliée à un canal d'alimentation (4) permettant d'alimenter la chambre d'ionisation (13) en un gaz échantillon à analyser,
le spectromètre à mobilité ionique (1) comprend au moins une porte à ions (10) sous la forme d'un obturateur à commutation de champ,
l'obturateur à commutation de champ comprend une contre-électrode (11) et une électrode d'injection (12),
la chambre d'ionisation (13) s'étend depuis la contre-électrode (11) jusqu'à l'électrode d'injection (12),
le spectromètre à mobilité ionique (1) comprend un canal d'évacuation (5) séparé du canal d'alimentation (4), qui est relié à la chambre d'ionisation (13) et qui permet d'évacuer le gaz échantillon de la chambre d'ionisation (13), sachant que
a) le spectromètre à mobilité ionique (1) est conçu pour faire fonctionner la chambre d'ionisation (13) sensiblement sans champ, au moins pendant une phase d'ionisation, et pour déplacer les ions de la chambre d'ionisation (13) vers la chambre de dérive (14) au moyen d'un champ électrique pendant une phase d'injection,
ou
b) la source d'ionisation (3) est conçue comme une source d'ionisation à fonctionnement pulsé, et le champ électrique entre la contre-électrode (11) et l'électrode d'injection (12) est présent en permanence,
**caractérisé en ce que** le canal d'alimentation (4) et le canal d'évacuation (5) débouchent directement dans la chambre d'ionisation (13).

2. Spectromètre à mobilité ionique selon la revendication précédente, **caractérisé en ce que** la disposition du canal d'alimentation (4) et du canal d'évacuation (5) définit une direction d'écoulement du gaz échantillon à travers la chambre d'ionisation (13), qui est orthogonale à la direction de dérive (D) des ions à travers la chambre de dérive (14).

3. Spectromètre à mobilité ionique selon l'une des revendications précédentes,
**caractérisé en ce que** le canal d'évacuation (5) est relié à l'atmosphère ambiante ou à un dispositif d'aspiration.

4. Spectromètre à mobilité ionique selon l'une des revendications précédentes,
**caractérisé en ce que** le canal d'alimentation (4) est relié à l'atmosphère ambiante ou à un système d'admission.

5. Spectromètre à mobilité ionique selon l'une des revendications précédentes,
**caractérisé en ce que** le canal d'alimentation (4) et/ou le canal d'évacuation (5) présente(nt) une paroi intérieure en matériau inerte ou avec un revêtement inerte, en particulier en verre et/ou en Silconert.

6. Spectromètre à mobilité ionique selon l'une des revendications précédentes,
**caractérisé en ce que** la source d'ionisation (3)
a) est disposée à l'intérieur de la chambre d'ionisation (13) ou forme au moins en partie l'une des parois de la chambre d'ionisation (13),
et/ou
b) est disposée à l'extérieur de la chambre d'ionisation (13) et est reliée à la chambre d'ionisation (13) par un canal d'ionisation (7) qui débouche dans la chambre d'ionisation (13).

7. Spectromètre à mobilité ionique selon l'une des revendications précédentes,
**caractérisé en ce que** l'axe central (M) du canal d'alimentation (4) est sensiblement aligné avec l'axe central (M) du canal d'évacuation (5).

8. Spectromètre à mobilité ionique selon l'une des revendications précédentes,
**caractérisé en ce que** le canal d'alimentation (4) est relié, depuis son point d'embouchure dans la chambre d'ionisation (13), au point d'embouchure du canal d'évacuation (5) dans la chambre d'ionisation (13) par un canal de liaison (6) formé dans la chambre d'ionisation, le canal de liaison (6) étant conçu comme un corps d'écoulement laminaire.

9. Spectromètre à mobilité ionique selon la revendication 8,
**caractérisé en ce que** la section transversale du canal de liaison (6) s'écarte de moins de ± 50 % de la section transversale du canal d'alimentation (4) et/ou du canal d'évacuation (5).

10. Spectromètre à mobilité ionique selon l'une des revendications précédentes,
**caractérisé en ce que** le canal d'alimentation (4) et/ou le canal d'évacuation (5) présente(nt) une section transversale sensiblement carrée, circulaire, rectangulaire ou elliptique.

11. Spectromètre à mobilité ionique selon l'une des revendications précédentes,
**caractérisé en ce que** la largeur (B) du canal d'alimentation (4) et/ou du canal d'évacuation (5) représente au moins 10 % du diamètre intérieur (1) de la chambre de dérive (14).

12. Spectromètre à mobilité ionique selon l'une des revendications précédentes,
**caractérisé en ce que** la profondeur (T1) du canal d'alimentation (4) et/ou du canal d'évacuation (5) représente au moins 10 % de la profondeur (T2) de la chambre d'ionisation (13).

13. Spectromètre à mobilité ionique selon l'une des revendications précédentes,
**caractérisé en ce que** la largeur (B) du canal d'alimentation (4) et/ou du canal d'évacuation (5) s'écarte de moins de ± 50 % du diamètre du détecteur d'ions (16) du spectromètre à mobilité ionique (1).

14. Spectromètre à mobilité ionique selon l'une des revendications précédentes,
**caractérisé en ce que** la largeur (B) du canal d'alimentation (4) et/ou du canal d'évacuation (5) s'écarte de moins de ± 50 % du diamètre d'une source d'ionisation (3), montée axialement, du spectromètre à mobilité ionique (1).

15. Spectromètre à mobilité ionique selon l'une des revendications précédentes,
**caractérisé en ce que** la section transversale du canal d'évacuation (5) s'écarte de moins de ± 50 % de la section transversale du canal d'alimentation (4).

16. Spectromètre à mobilité ionique selon l'une des revendications précédentes,
**caractérisé en ce que** le spectromètre à mobilité ionique (1) comporte un canal de sortie de gaz de dérive (18) permettant d'évacuer le gaz de dérive introduit dans la chambre de dérive (14), le canal de sortie de gaz de dérive (18) étant formé séparément du canal d'évacuation (5).

17. Spectromètre à mobilité ionique selon la revendication 16,
**caractérisé en ce que** le canal de sortie de gaz de dérive (18) débouche directement dans la chambre de dérive (14).
